# EUROPEAN PATENT SPECIFICATION

(11) **EP 2 981 789 B1**
(45) Date of publication and mention of the grant of the patent: **27.02.2019**
(21) Application number: 14779094.3
(22) Date of filing: 04.04.2014
(51) Int. Cl.: G01W 1/10, G01C 21/34, G01C 21/36

(54) **METHOD AND SYSTEM FOR COMBINING LOCALIZED WEATHER FORECASTING AND ITINERARY PLANNING**
VERFAHREN UND SYSTEM ZUR KOMBINATION VON LOKALISIERTER WETTERPROGNOSE UND ROUTENPLANUNG
PROCÉDÉ ET SYSTÈME PERMETTANT DE COMBINER DES PRÉVISIONS MÉTÉOROLOGIQUES LOCALISÉES ET LA PLANIFICATION D'UN ITINÉRAIRE

(30) Priority: 04.04.2013 US 201313856923; 16.06.2013 US 201361835626 P; 19.06.2013 US 201361836713 P; 20.06.2013 US 201313922800; 26.06.2013 US 201361839675 P; 22.07.2013 US 201313947331
(43) Date of publication of application: 10.02.2016
(60) Divisional application: 19151007.2
(73) Proprietor: Sky Motion Research, ULC, Montreal, Québec H3A 1P8 (CA)
(72) Inventor: LEBLANC, Andre, Montreal, Québec H3R 1Z6 (CA)
(74) Representative: Barnfather, Karl Jon
(86) International application number: PCT/CA2014/000315
(87) International publication number: WO 2014/161078

(56) References cited:
- EP-A1- 1 218 698
- US-A1- 2009 088 965
- US-A1- 2011 307 168
- US-A1- 2011 307 168
- US-B1- 6 317 686
- US-B1- 6 317 686

## Description

### BACKGROUND

The subject matter disclosed generally relates to methods for producing weather forecasts. More specifically, the subject matter relates to software applications for producing weather forecasts.

Conventional weather forecasting systems provide weather predictions 12 hours to a few days from the present time. If one needs a short-term forecast or a forecast with a fine time scale, the best information available usually is an hourly forecast for the day.

Conventional weather forecasts are average forecasts for the area for which they are generated. Thus, a forecast may be inaccurate for a precise location within this area, and even the present weather displayed for an area may differ from the actual weather for a precise location within this area.

Moreover, conventional weather forecasts are displayed at a time scale that is too coarse to allow a user to know when a weather event takes place in a precise location and time. Even for hourly conventional weather forecasts, it is impossible for the user to know if the forecasted weather event will last one hour or one minute and, for the latter, at what time it will take place exactly within the hour.

For a user who stays at the same place during a part of a day, conventional weather forecasts may provide a reliable weather forecast. However, for a moving user, conventional weather forecasts that are communicated to the public lack the necessary temporal and spatial resolution to provide the moving user with a reliable weather forecast along the itinerary of the user. Furthermore, no conventional weather forecasts or itinerary planning tools estimate the delays caused by weather on a route, although there is a need for tools comprising that function.

Therefore, there is a need in the market for the generation and display of short-term weather forecasts for various locations and times, and there is further a need in the market for a system and method which allow for estimating the weather along the route between the departure location and the destination location so that the user may attempt to take alternative routes to avoid extreme weather conditions.

US20110307168 describes a wireless phone navigation system configured to re-route a user based on a prediction of a future position of a weather system.

US6317686 discloses a traffic information system predicting travel times and future traffic accounting for the effect of future weather conditions.

EP1218698 discloses a system for planning vehicle routes taking into account hazard zones and types including zones with a given probability of precipitation.

### SUMMARY

The invention provides a computer implemented method for generating itineraries as defined in claim 1, and a device for generating itineraries as defined in claim 8.

In some embodiments, the method may comprise estimating a travel time between locations based on the weather forecast.

In some embodiments, the method may comprise identifying at least one of a modified intermediary time based on the weather forecast, and identifying a modified weather forecast associated with the intermediary location and the modified intermediary time.

According to the invention, the weather forecast comprises information indicating a probability of a specific type of precipitation at a specific rate.

In some embodiments, the departure location, the destination location and the first time may be received from a remote device (e.g. GPS, a user-operable device, etc.). At least one of the departure location and the destination location may be associated with a current location of the remote device, and the first time may be associated with a current time.

In some embodiments, the method may comprise: identifying multiple intermediary locations, identifying multiple intermediary times associated with the multiple intermediary locations, and identifying multiple weather forecasts associated with the multiple intermediary locations and the multiple intermediary times, wherein the itinerary is identified based at least on the multiple weather forecasts.

In some embodiments, the method may comprise: identifying a first set of intermediary locations and a second set of intermediary locations, identifying a first set of intermediary times associated with the first set of intermediary locations, identifying a second set of intermediary times associated with the second set of intermediary locations, identifying a first set of weather forecasts associated with the first set of intermediary locations and the first set of intermediary times, identifying a second set of weather forecasts associated with the second set of intermediary locations and the second set of intermediary times, and comparing the first set of weather forecasts and the second set of weather forecasts, wherein, based on the comparison, the identified itinerary comprises the first set of intermediary locations or the second set of intermediary locations.

The method may comprise obtaining a list of locations and a list of times corresponding to the locations, obtaining a weather forecast for each location of the list of locations for the time corresponding to each location, resulting in a list of weather forecasts, and outputting the list of weather forecasts for corresponding locations. The method may comprise estimating a delay in a displacement due to the weather forecasts. The delay in the displacement may be used to modify the times corresponding to the locations.

In some embodiments, the device may comprise one or more processors, a memory storing computer instructions that can be executed by the one or more processors such that the device is caused to perform any one or more of the methods described above, when the instructions are executed. Further, there may be a non-transitory computer-readable medium storing such instructions.

Further, the device may comprise one or more processors, a memory storing instructions for the one or more processors, a communication module to connect to a remote server over a communication network, and a display. When the instructions are executed, the device may be caused to: receive, from the remote server, an itinerary comprising a departure location, a destination location and an intermediary location, the itinerary generated based at least on a weather forecast associated with the intermediary location and an intermediary time, the intermediary time representing the time at which the device is expected to arrive at the intermediary location, and cause, on the display, a display of at least a part of the itinerary received from the remote server. The device may be a mobile device such as, non-exclusively, a handheld device, a cellphone, a vehicle, etc.

### BRIEF DESCRIPTION OF THE DRAWINGS

Further features and advantages of the present disclosure will become apparent from the following detailed description, taken in combination with the appended drawings, in which:
Figure 1 shows an example of a block diagram of a system for combining localized weather forecasting and itinerary planning;
Figure 2A shows an example of a block diagram of a suitable nowcaster for implementing one or more embodiments;
Figure 2B is one example of a more detailed block diagram of a suitable nowcaster for implementing one or more embodiments;
Figure 2C is another example of a more detailed block diagram of a suitable nowcaster for implementing one or more embodiments;
Figure 3 is a screenshot illustrating an example of an itinerary returned by an itinerary generating module;
Figure 4A is an example of a network environment in which the embodiments may be practiced;
Figure 4B is an example of another network environment in which the embodiments may be practiced; and
Figure 5 is an exemplary diagram illustrating a suitable computing operating environment in which embodiments of the claimed subject matter may be practiced.

It will be noted that, throughout the appended drawings, like features are identified by like reference numerals.

### DETAILED DESCRIPTION

The embodiments will now be described more fully hereinafter with reference to the accompanying drawings.

The present embodiments may be embodied as methods or devices. Accordingly, the embodiments may take the form of an entirely hardware embodiment, an entirely software embodiment, an embodiment combining software and hardware aspects, etc. Furthermore, although the embodiments are described with reference to a portable or handheld device, they may also be implemented on desktops, laptop computers, tablet devices, or any computing device having sufficient computing resources to implement the embodiments.

### Definitions

In the present specification, the following terms are meant to be defined as indicated below:
Nowcasting: The term *nowcasting* is a contraction of "now" and "forecasting"; it refers to the sets of techniques devised to make short-term forecasts, typically in the 0- to 12-hour range.

A nowcaster is a weather forecasting device which prepares very short-term (e.g., 1 minute, 5 minutes, 15 minutes, 30 minutes, etc.) forecasts for a very small region on Earth (5 meters, 10 meters, 50 meters, 100 meters, 500 meters, 1,000 meters, etc.).

A weather value is a weather-related quantity or attribute of any sort such as temperature, pressure, visibility, precipitation type and intensity, accumulation, cloud cover, wind, etc.

A forecasted weather value is a weather value that is predicted by the nowcaster.

A weather-related event is an event that can affect a weather value or a forecasted weather value, which include, for example, at least one of hail, a wind gust, lightning, a temperature change, etc.

Precipitation type (PType): indicates the type of precipitation. Examples of precipitation types include, but are not limited to, rain, snow, hail, freezing rain, ice pellets, or ice crystals.

Precipitation rate (PRate): indicates the precipitation intensity. Examples of precipitation rate values include, but are not limited to, no (i.e., none), light, moderate, heavy, extreme. In an embodiment, the precipitation rate can also be expressed as a range of values such as: none to light, light to moderate, moderate to heavy, or any combination of the above.

Precipitation probability: indicates the probability that precipitation might occur. Examples of precipitation probability values include, but are not limited to, no, unlikely, slight chance of, chance of, likely, very likely, or certain.

In an embodiment, the precipitation probability can also be expressed as a range of values such as: none to light, light to moderate, or moderate to heavy. Precipitation probability may also be expressed in terms of percentages; e.g., 0%, 25%, 50%, 75%, 100%; or ranges of percentages; e.g., 0% to 25%, 25% to 50%, 50% to 75%, 75% to 100%. In an embodiment, the precipitation probability may be taken from a probability distribution.

Precipitation type and precipitation rate categories (PTypeRate): a PTypeRate category is combination of precipitation type and precipitation rate to which may be associated a probability of occurrence for a given period to indicate the possibility of receiving a certain type of precipitation at a certain rate.

A weather forecast is a set of one or more forecasted weather values that are displayable to users.

A user is a person to whom or machine to which a weather forecast is forwarded.

An itinerary is a list of locations or directions guiding a user from point A to point B. Optionally, the itinerary may comprise times corresponding to a location or time intervals between locations. A key point is a location that meets a criterion which may be a user's preference.

Briefly stated, the present embodiments describe a method and system for combining localized weather forecasting and itinerary planning. The weather forecast is generated by a short-term weather forecaster known as a system for generating nowcasts or a nowcaster.

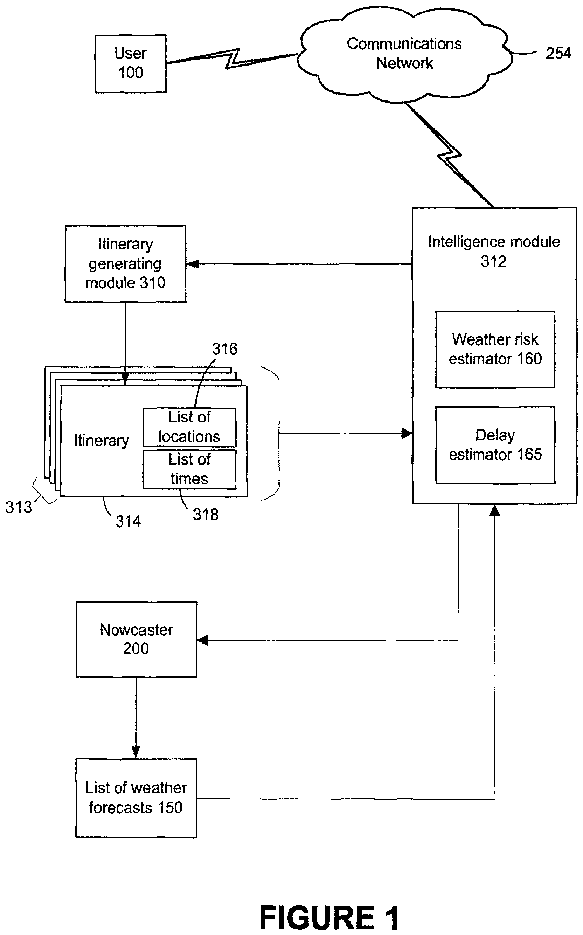

Now referring to Figure 1, there is described a system for combining localized weather forecasting and itinerary planning. The system comprises an intelligence module **312,** an itinerary generating module **310** and a nowcaster **200.** The intelligence module **312** further comprises a weather risk estimator **160** and a delay estimator **165.** These components will be further described below.

### Itinerary Generation Module

The itinerary generating module **310** may be a web-based module and/or a GPS-based module for generating routes and directions.

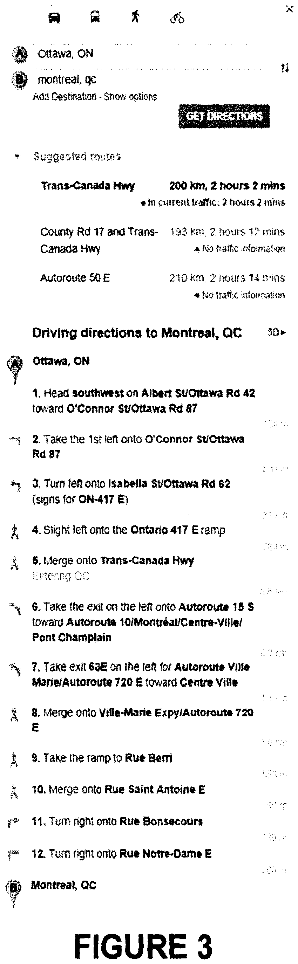

An example of such web-based modules may include MapQuest™, Yahoo™ Maps, Google™ Maps, and so on. In these types of modules, the data relating to the generation or routes is stored on a remote server that is accessible via a telecommunications network such as the Internet. Using these modules, the user may request directions from a first location A to a second location B, whereby the module may return a list of directions for the displacement from A to B as shown in Figure 3.

As shown in Figure 1, the itinerary generating module **310** generates an itinerary **314,** which comprises a list of locations **316** and a list of times **318,** where the times correspond to the locations.

In an embodiment, the itinerary generating module **310** may provide one or more choices of itineraries for the user to choose. Then, the module generates a list **313** of itineraries.

In another embodiment, the data may be downloaded and/or pushed from the server to the computing device on which the embodiments are practiced, whereby the route may be displayed without accessing the remote server.

In an embodiment, the itinerary generating module **310** may also include a GPS device which determines the current location of the user using a satellite connection. The GPS unit may be embedded in a portable device such as an iPhone™ or the like. In another example, the GPS device may be embedded in a handheld GPS navigation device such as the series of devices manufactured by Garmin™ or Magellan™ etc.

### Intelligence Module

As shown in Figure 1, the intelligence module **312** links the user **100,** the itinerary generating module **310,** and the nowcaster **310** by sending appropriate queries to and receiving information from these elements. More precisely, the intelligence module **312** may receive information from a user **100** through a communication network **254.** In an embodiment, the intelligence module **312** may be linked to a user interface for receiving the user's entries such that the identification of the locations A and B, departure time, and the user preferences regarding the locations for which the nowcasts are needed. The intelligence module **312** may use this information received from user **100** to query the itinerary generating module **310,** for example, by sending the geographic locations of points A and B characterizing the beginning and the end of the itinerary. The intelligence module **312** may also send to the itinerary generating module **310** information about the beginning time of the itinerary or about the user's preferences. For example, the user may choose to obtain the nowcasts for key points such as major cities along the route, or by increments of, for example, 30 km, etc.

According to an embodiment, the intelligence module **312** sends a first time or a current time and a time interval to the itinerary generating module **310.**

Depending on the embodiment, the intelligence module **312** or the itinerary generating module **310** may estimate a time of arrival for each key point which represents the estimated time at which the user is expected to arrive at a certain key point. Estimation of the arrival time may depend on several factors including: the departure time (which, unless specified by the user, is taken as the present time), the distance between the departure point and the respective key point, traffic information received from the itinerary generating module **310** (or another source), weather information, current speed, and speed limit associated with each segment of the route between the current location and the respective key point.

The itinerary generating module **310** generates an itinerary **314** or a list 313 of itineraries as described hereinabove. According to an embodiment, each itinerary comprises a list of locations **316** and a list of times **318.** This information is sent back to the intelligence module **312.**

According to an embodiment, the intelligence module may select locations (such as the key points specified in the user's preferences) and their corresponding times and sends them to the nowcaster **200.**

In an embodiment, the intelligence module **312** may send the location information of each location or key point along with the current time whereby the user may see the current weather conditions in the different locations along the route.

Depending on the embodiment, the intelligence module **312** may send all the list in just one call to the server on which the nowcaster **200** is implemented, or, on the contrary, divide the list into more than one part when the call is sent to the nowcaster **200.**

For each location and time, the nowcaster **200** outputs a weather forecast. Therefore, the nowcaster **200** generates a list of weather forecasts **150** corresponding to each itinerary **314.**

As discussed above, the itinerary generating module **310** may provide different choices of routes comprising weather conditions along different locations or key points. In an embodiment, when more than one itinerary is provided, a weather risk estimator **160** within the intelligence module **312** may compute the risk associated with each list of weather forecasts **150** corresponding to an itinerary, thus sorting the lists of weather forecasts **150** and their corresponding itinerary according to the weather risk. The weather risk estimator **160** may assign each itinerary a category or a grade depending on the gravity of the weather events happening on the itinerary (strong winds, heavy rain, etc.) or the probability that these events will take place. Sorting itineraries adds information (the estimated risk) to the lists of weather forecasts **150.** According to an embodiment, if the itinerary is displayed (textually or graphically), the parts of the itineraries that have a higher or lower risk may be displayed with a distinctive color.

According to an embodiment, if the weather risk is estimated for various itineraries, the method may route traffic to the least risky itinerary.

When the intelligence module has received locations, times, weather forecasts, and other information (such as weather risk) of an itinerary, this information is sent to the user **100** using the communication network **254.**

According to an embodiment, the weather forecast for each location and time in an itinerary may be provided on a single web page.

According to an embodiment, the intelligence module **312** may comprise a delay estimator **165.** The delay estimator **165** uses the list of weather forecasts to determine the delay on a part of an itinerary due to the weather conditions, such as rain, fog, strong wind, etc., that can slow down the traffic. The delay estimator **165** may use a database comprising statistics about the delays due to weather conditions. If the delay estimator **165** is used, the list of times **318** corresponding to the list of locations **316** is not relevant anymore because delays change the times in the itinerary. Therefore, the intelligence module queries again the itinerary generating module **310** by taking into account the delays, producing a more accurate list of times **318.** The intelligence module **312** receives this updated list of times **318** and sends it to the nowcaster **200** for an update of the list of weather forecasts **150.** Therefore, when the delay estimator is used, an iterative process takes place. This iterative process may be programmed to cease after a given number of iterations or after equilibrium is reached in the results. When the iterative process is done, the intelligence module outputs the list **313** of itineraries along with the most accurate list of weather forecasts **150.**

### Nowcaster

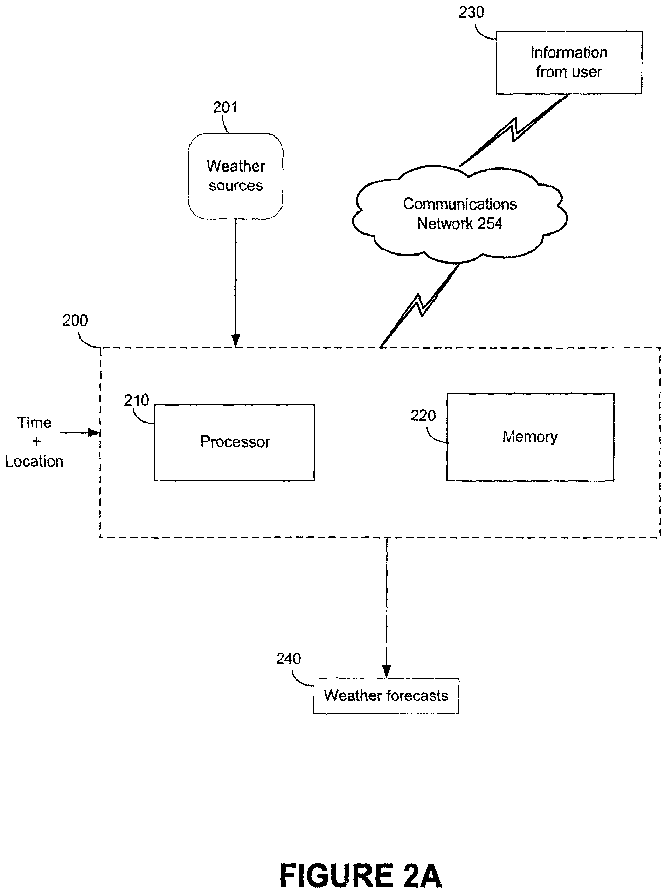

Figures 2A-2C are block diagrams of a nowcaster according to one or more embodiments of the subject matter described in the specification.

As shown in Figures 2A-2C, the nowcaster **200** receives weather observations from different sources **201** such as weather observation sources including but not limited to: point observations **201-2** (e.g., feedback provided by users and automated stations), weather radars **201-3,** satellites **201-4** and other types of weather observations **201-1,** and weather forecast sources such as numerical weather prediction (NWP) model output **201-5** and weather forecasts and advisories **201-6.**

The nowcaster **200** comprises a memory **220** and a processor **210.** The memory **220** comprises the instructions for the method and also stores data from the weather sources, intermediate results, and weather forecasts. The processor **210** allows the nowcaster **200** to perform calculations.

The nowcaster **200** can receive information **230** from a user through a communication network **254.**

The nowcaster **200** outputs a weather forecast, or a succession of weather forecasts.

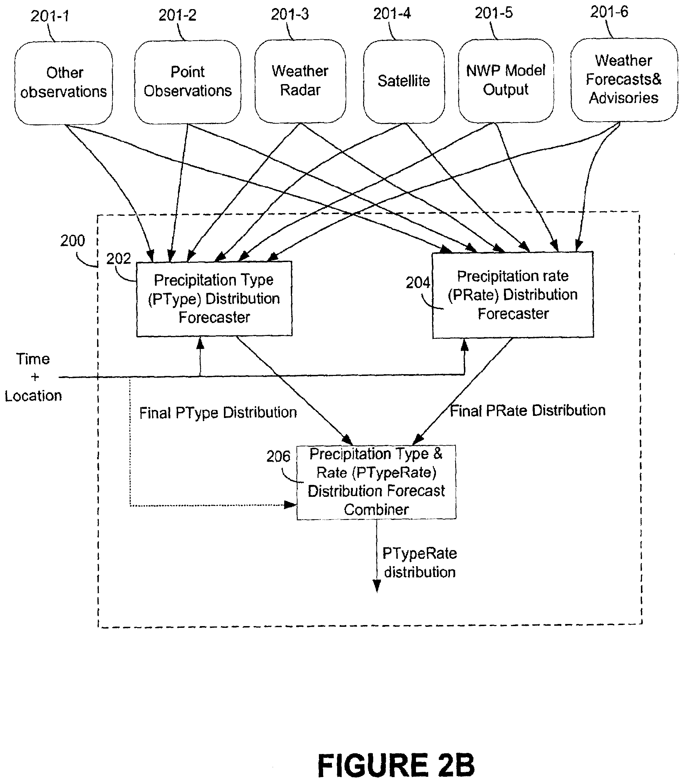

Figure 2B is one embodiment of the nowcaster 200. In this embodiment, the nowcaster **200** comprises a PType distribution forecaster **202** and a PRate distribution forecaster **204.** The PType forecaster **202** receives the weather observations from the different sources **201** and outputs a probability distribution of precipitation type over an interval of time, for a given latitude and longitude (and/or location). For example:
a. Snow: 10%
b. Rain: 30%
c. Freezing Rain: 60%
d. Hail: 0%
e. Ice Pellets: 0%

Similarly, the PRate distribution forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip.: 30%
g. Light: 40%
h. Moderate: 20%
i. Heavy: 10%

The PRate and PType values output by the PRate distribution forecaster **204** and the PType forecaster **202** are sent to a forecast combiner **206** to combine these values into a single value PTypeRate which represents the precipitation outcomes. For example, if the value of PType is "Snow," and the value of "PRate" is heavy, the combined value of PTypeRate may be "heavy snow."

For a given latitude and longitude, the system outputs forecasted PTypeRate Distributions for predefined time intervals, either fixed (ex: 1 minute) or variable (ex: 1 minute, then 5 minutes, then 10 minutes, etc.). The system can either pre-calculate and store forecasted PTypeRate Distributions in a sequence of time intervals, or calculate it in real time. A PTypeRate Distribution represents, for each time interval, the certainty or uncertainty that a PTypeRate will occur.

With reference to Figure 2B, the forecast combiner **206** receives the final PRate distribution from the PType forecaster **202** and the final PRate distribution from the PRate distribution forecaster **204** to combine them into a group of PTypeRate distribution values each representing the probability of receiving a certain type of precipitation at a certain rate. An example is provided below.

Assuming that the PType distribution is as follows: Snow: 50%, Rain: 0%, Freezing rain: 30%, Hail: 0%, Ice pellets: 20%, and the PRate distribution is as follows: None: 0%, Light: 10%, Moderate: 20%, Heavy: 30%, Very Heavy: 40%, the PTypeRate distributions may be as follows:

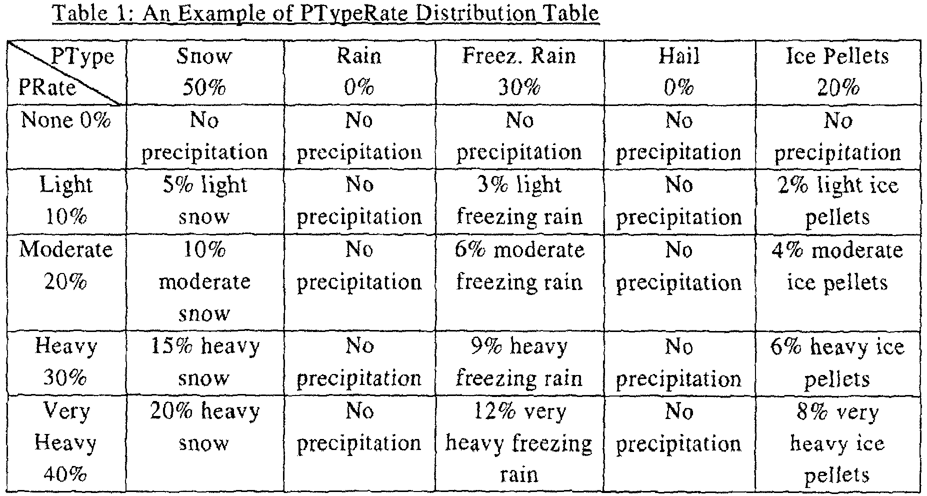

Accordingly, the forecast combiner **206** multiplies the probability of each type of precipitation by the probability of each rate of precipitation to obtain a probability of receiving a certain type of precipitation at a certain rate, for example, 20% chance of heavy snow, or 12% chance of very heavy freezing rain. In an embodiment, it is possible to associate probability ranges with textual information for displaying the textual information to the user instead of the probabilities in numbers. For example, probabilities that are between 5% and 15% may be associated with the text: "low chance," while probabilities that are between 40% and 70% may be associated with the text "high chance," or "very likely," etc., whereby, instead of displaying: 60% chance of heavy snow, it is possible to display: "high chance of heavy snow."

In another embodiment, it is possible to combine two or more different PTypeRates along one or more dimensions (the dimensions including: the rate, type, or probability). For example, results of such combination may include: Likely light to moderate rain, Likely light to moderate rain or heavy snow; Likely moderate rain or snow; Likely rain or snow; Chance of light to moderate rain or heavy snow or light hail; Chance of moderate rain, snow or hail; Chance of rain, snow or hail, etc.

Accordingly, the nowcaster **200** receives the location for which the nowcasts are needed and the time and/or time interval for which the nowcasts are needed and outputs the PTypeRate distribution for the given location and for the specific time.

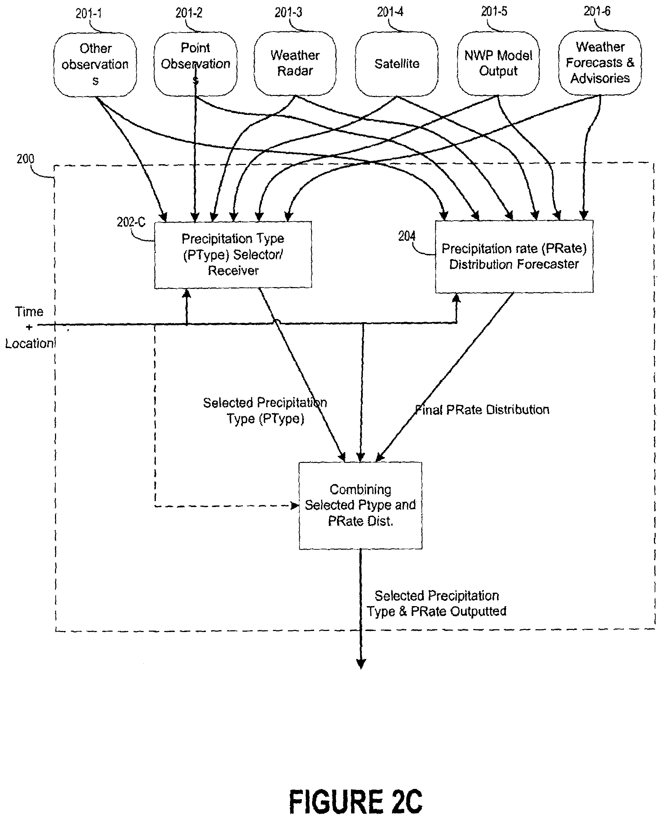

Figure 2C illustrates another embodiment of the nowcaster **200.** In this embodiment, the nowcaster **200** comprises a PType selector/receiver **202-C** and a PRate distribution forecaster **204.**

Similar to the embodiment shown in Figure 2B, the PRate distribution forecaster **204** receives the weather observations for a given latitude and longitude from the different sources **201** and outputs a probability distribution forecast of a precipitation rate (PRate) in a representation that expresses the uncertainty. For example, the PRate may be output as a probability distribution of precipitation rates or a range of rates over an interval of time, for a given latitude and longitude. For example:
f. No Precip.: 30%
g. Light: 40%
h. Moderate: 20%
i. Heavy: 10%

However, the PType selector/receiver **202-C** does not output a probability distribution associated with different types of precipitation. Instead, the PType selector/receiver **202-C** receives weather observations for a given latitude and longitude from the different sources **201** to select one precipitation type from a list of different precipitation types. For example, based on the inputs received from the sources **201,** the PType selector/receiver **202-C** selects a single precipitation type that is most likely to occur in the given latitude and the longitude (and/or location) from the following list of precipitation types:
a. Snow
b. Rain
c. Freezing Rain
d. Hail
e. Ice Pellets
f. Mix (e.g., a+c, a+d, b+c, a+e, c+e, d+e, etc.)

From the list of precipitation types such as the one above, only one precipitation type is selected for a given location. For example, a mix of snow and freezing rain can be selected as the most likely precipitation type for a give location at a given time. The precipitation type is not associated with a probability value. In fact, since only one precipitation type is selected for any given location and time corresponding to the location, the selected precipitation type will have an effective probability value of 100%.

The list of precipitation types that are available for selection of one type may include a mix type that represent a mix of two different precipitation types (e.g., snow and freezing rain, hail and ice pellets, etc). A mix type is considered as a distinct precipitation type available for selection, and as shown above in (f) of the list, there can be many different mix types representing the mix of different pairs of various precipitation types.

In another embodiment, the precipitation type is not selected by the PType selector/receiver **202-C** but instead is received from a source outside the nowcaster **200.** In other words, the nowcaster 200 may request to a remote source (e.g., a third-party weather service) identification of the precipitation type that is most likely to occur for a given location at a given time and receive a response from the source identifying the most likely precipitation type. In this case, selection of the precipitation type is not performed by the nowcaster **200.** The nowcaster **200** merely is inputted with the already-selected precipitation type and thereby can save computational power of the nowcaster **200** that would otherwise have been needed to perform the selection.

The selected precipitation type and the PRate values respectively output by the PType selector/receiver **202-C** and the PRate distribution forecaster **204** are combined. For example, if the selected precipitation type is snow, and the PRate values are as described above, the combined information would indicate:
a. No Snow: 30%
b. Light Snow: 40%
c. Moderate Snow: 20%
d. Heavy Snow: 10%.

As only one precipitation type is concerned, only a minimal amount of computational power is needed to perform the combining to output the final weather forecast data. Since the PType selector/receiver **202-C** will output one (1) precipitation type for a given location and time, if the PRate distribution forecaster **204** outputs a number m of probability distribution, the final weather forecast data will comprise only a number m (m*1) of weather forecast distribution.

In outputting the final weather forecast data, it is possible to associate probability ranges with textual information for displaying the textual information to the user instead of the probabilities in numbers, similar to the embodiment shown in Figure 2B. For example, probabilities that are between 5% and 15% may be associated with the text: "low chance," while probabilities that are between 40% and 70% may be associated with the text "high chance," or "very likely," etc., whereby, instead of displaying: "60% chance of heavy snow," it is possible to display: "high chance of heavy snow."

Accordingly, the nowcaster **200** receives the location for which the nowcasts are needed and the time and/or time interval for which the nowcasts are needed and outputs the selected PType and PRate distribution for the given location and for the specific time.

The nowcaster according to the embodiment shown in Figure 2C may be advantageous over the embodiment shown in Figure 2B in certain circumstances in which efficiency is desired. The embodiment of Figure 2C can be implemented using much less processing power than the embodiment of Figure 2B. However, the embodiment of Figure 2B may be more suitable than the embodiment of Figure 2C in providing a more detailed and accurate snapshot of weather forecast data for any given location and time.

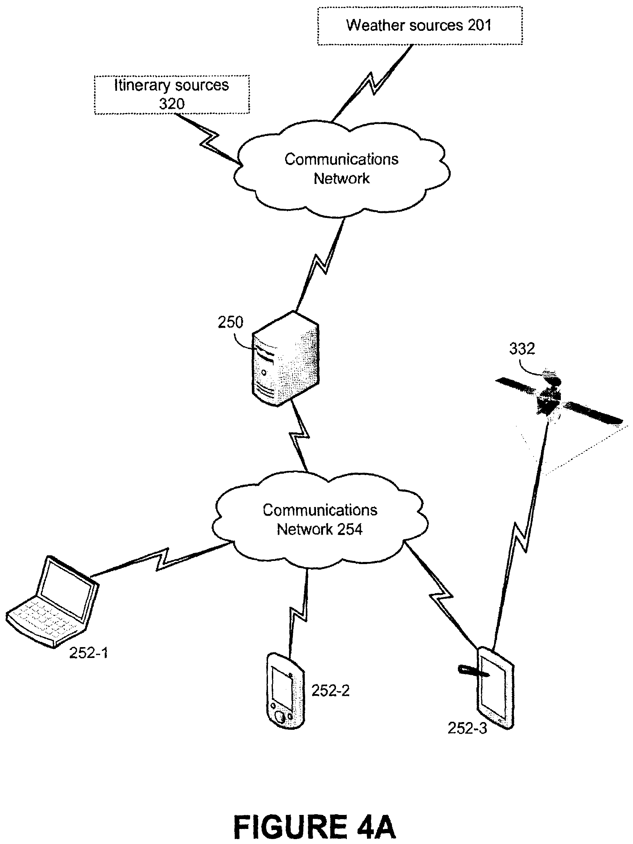

Figure 4A is an example of a network environment in which the embodiments may be practiced. The nowcaster **300** may be implemented on a server/computer **250** which is accessible by a plurality of client computers **252** over a communication network **254.** The client computers may include but are not limited to: laptops, desktops, portable computing devices, tablets, and the like. Using a client computer **252,** each user may enter the directions between two locations and preferably the time of departure (otherwise the current time is used to replace this). The information is sent to the remote server **250** over a telecommunications network. The server **250** returns a list of locations on the route from locations A to B along with nowcasts at these locations on the route. The server accesses weather source **201** over a telecommunications network as discussed in connection with Figure 2A. The server **250** may have geographic data stored thereon and may also access itinerary sources **320** provided by a third entity.

Preferably, the computing device **252** is GPS-enabled, in which case, the computing device may provide updates to the server **250** for updating the nowcasts along the route, as discussed above.

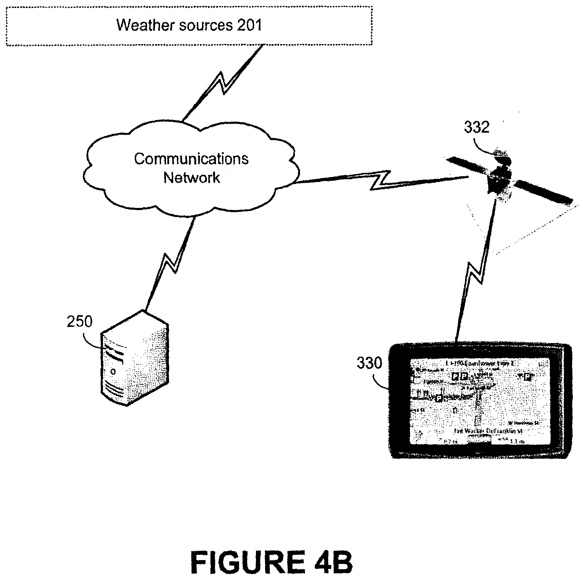

Figure 4B is an example of another network environment in which the embodiments may be practiced. In this embodiment, the user enters the destination and views the itinerary on a GPS navigation device. The GPS navigation device takes the departure location as the present location. The present location and the end destination along with the route chosen by the satellite may be sent to the server **250** via the satellite **332.** The intelligence module implemented in the server **250** may return the nowcasts for key points along the route, and send the nowcasts and an identification of the key points to the GPS device **330** for adding to the itinerary given by the GPS device **330.**

In an embodiment, if the user is generating an itinerary using a GPS and/or web-enabled computing device, the nowcasts may be updated on the map based on the advancement of the user on the route and the changes in weather conditions.

In an embodiment, the nowcasts may be provided on the map along with the time/time interval associated with each nowcast. In an embodiment, the time shown on the map is the estimated time of arrival which is estimated by the intelligence module **312** based on the current location, speed, and weather and traffic conditions.

### Hardware and Operating Environment

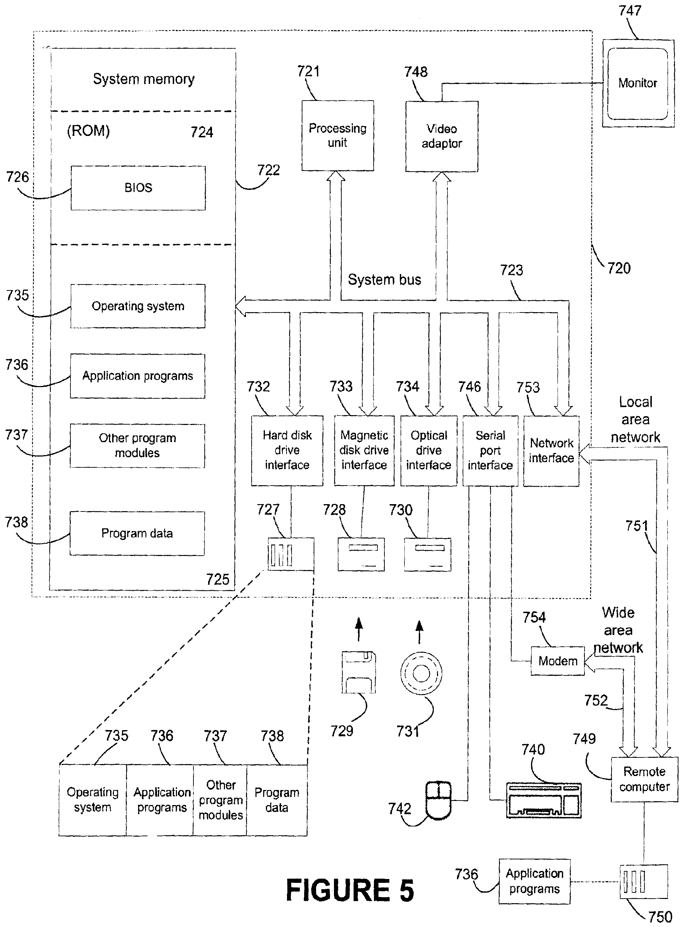

Figure 5 illustrates an exemplary diagram of a suitable computing operating environment in which embodiments of the claimed subject matter may be practiced. The following description is associated with Figure 5 and is intended to provide a brief, general description of suitable computer hardware and a suitable computing environment in conjunction with which the embodiments may be implemented. Not all the components are required to practice the embodiments, and variations in the arrangement and type of the components may be made without departing from the scope of the embodiments.

Although not required, the embodiments are described in the general context of computer-executable instructions, such as program modules, being executed by a computer, such as a personal computer, a hand-held or palm-size computer, smartphone, or an embedded system such as a computer in a consumer device or specialized industrial controller. Generally, program modules include routines, programs, objects, components, data structures, etc., that perform particular tasks or implement particular abstract data types.

Moreover, those skilled in the art will appreciate that the embodiments may be practiced with other computer system configurations, including hand-held devices, multiprocessor systems, microprocessor-based or programmable consumer electronics, network PCS, minicomputers, mainframe computers, cellular telephones, smartphones, display pagers, radio frequency (RF) devices, infrared (IR) devices, Personal Digital Assistants (PDAs), laptop computers, wearable computers, tablet computers, a device of the iPod or iPad family of devices, integrated devices combining one or more of the preceding devices, or any other computing device capable of performing the methods and systems described herein. The embodiments may also be practiced in distributed computing environments where tasks are performed by remote processing devices that are linked through a communications network. In a distributed computing environment, program modules may be located in both local and remote memory storage devices.

The exemplary hardware and operating environment of Figure 5 includes a general-purpose computing device in the form of a computer **720,** including a processing unit **721,** a system memory **722,** and a system bus **723** that operatively couples various system components including the system memory to the processing unit **721.** There may be only one or there may be more than one processing unit **721,** such that the processor of computer **720** comprises a single central-processing unit (CPU), or a plurality of processing units, commonly referred to as a parallel processing environment. The computer **720** may be a conventional computer, a distributed computer, or any other type of computer; the embodiments are not so limited.

The system bus **723** may be any of several types of bus structures including a memory bus or memory controller, a peripheral bus, and a local bus using any of a variety of bus architectures. The system memory may also be referred to as simply the "memory," and includes read-only memory (ROM) **724** and random access memory (RAM) **725.** A basic input/output system (BIOS) **726,** containing the basic routines that help to transfer information between elements within the computer **720,** such as during start-up, is stored in ROM **724.** In one embodiment of the claimed subject matter, the computer **720** further includes a hard disk drive **727** for reading from and writing to a hard disk, not shown, a magnetic disk drive **728** for reading from or writing to a removable magnetic disk **729,** and an optical disk drive **730** for reading from or writing to a removable optical disk **731,** such as a CD ROM or other optical media. In alternative embodiments of the claimed subject matter, the functionality provided by the hard disk drive **727,** magnetic disk **729** and optical disk drive **730** is emulated using volatile or non-volatile RAM in order to conserve power and reduce the size of the system. In these alternative embodiments, the RAM may be fixed in the computer system, or it may be a removable RAM device, such as a Compact Flash memory card.

In an embodiment of the claimed subject matter, the hard disk drive **727,** magnetic disk drive **728,** and optical disk drive **730** are connected to the system bus **723** by a hard disk drive interface **732,** a magnetic disk drive interface **733,** and an optical disk drive interface **734,** respectively. The drives and their associated computer-readable media provide non-volatile storage of computer readable instructions, data structures, program modules, and other data for the computer **720.** It should be appreciated by those skilled in the art that any type of computer-readable media that can store data that is accessible by a computer, such as magnetic cassettes, flash memory cards, digital video disks, Bernoulli cartridges, RAMs, ROMs, and the like, may be used in the exemplary operating environment.

A number of program modules may be stored on the hard disk, magnetic disk **729,** optical disk **731,** ROM **724,** or RAM **725,** including an operating system **735,** one or more application programs **736,** other program modules **737,** and program data **738.** A user may enter commands and information into the personal computer **720** through input devices such as a keyboard **740** and pointing device **742.** Other input devices (not shown) may include a microphone, joystick, game pad, satellite dish, scanner, touch-sensitive pad, or the like. These and other input devices are often connected to the processing unit **721** through a serial port interface **746** that is coupled to the system bus, but may be connected by other interfaces, such as a parallel port, game port, or a universal serial bus (USB). In addition, input to the system may be provided by a microphone to receive audio input.

A monitor **747** or other type of display device is also connected to the system bus **723** via an interface, such as a video adapter **748.** In one embodiment of the claimed subject matter, the monitor comprises a Liquid Crystal Display (LCD). In addition to the monitor, computers typically include other peripheral output devices (not shown), such as speakers and printers. The monitor may include a touch-sensitive surface which allows the user to interface with the computer by pressing on or touching the surface.

The computer **720** may operate in a networked environment using logical connections to one or more remote computers, such as a remote computer **749.** These logical connections are achieved by a communication device coupled to or a part of the computer **720;** the embodiment is not limited to a particular type of communications device. The remote computer **749** may be another computer, a server, a router, a network PC, a client, a peer device, or other common network node, and typically includes many or all of the elements described above relative to the computer **720,** although only a memory storage device **750** has been illustrated in Figure 6. The logical connections depicted in Figure 6 include a local-area network (LAN) **751** and a wide-area network (WAN) **752.** Such networking environments are commonplace in offices, enterprise-wide computer networks, intranets, and the Internet.

When used in a LAN-networking environment, the computer **720** is connected to the local network **751** through a network interface or adapter **753,** which is one type of communications device. When used in a WAN-networking environment, the computer **720** typically includes a modem **754,** a type of communications device, or any other type of communications device for establishing communications over the WAN **752,** such as the Internet. The modem **754,** which may be internal or external, is connected to the system bus **723** via the serial port interface **746.** In a networked environment, program modules depicted relative to the personal computer **720,** or portions thereof, may be stored in the remote memory storage device. It is appreciated that the network connections shown are exemplary and other means of establishing a communications link between the computers may be used.

The hardware and operating environment in conjunction with which embodiments of the claimed subject matter may be practiced has been described. The computer in conjunction with which embodiments of the claimed subject matter may be practiced may be a conventional computer, a hand-held or palm-size computer, a computer in an embedded system, a distributed computer, or any other type of computer. Such a computer typically includes one or more processing units as its processor, and a computer-readable medium such as a memory. The computer may also include a communications device, such as a network adapter or a modem, so that it is able to communicatively couple other computers.

While preferred embodiments have been described above and illustrated in the accompanying drawings, it will be evident to those skilled in the art that modifications may be made without departing from this disclosure, within the framework of the appended claims.

## Claims

1. A computer implemented method for generating itineraries comprising:
receiving a departure location, a destination location and a departure time;
identifying a first intermediary location between the departure location and the destination location;
identifying a first intermediary time that a user of a ground transportation device departing from the departure location at the departure time is projected to arrive at the first intermediary location;
identifying a first weather forecast for the first intermediary location at the first intermediary time;
**characterised in that**
the first weather forecast comprises a first probability of a specific type of precipitation at a specific rate;
and **in that** the method further comprises:
identifying a second intermediary location between the departure location and the destination location;
identifying a second intermediary time that a user of a ground transportation device departing the departure location at the departure time is projected to arrive at the second intermediary location;
identifying a second weather forecast for the second intermediary time at the second intermediary location, the second weather forecast comprising a second probability of the specific type of precipitation at the specific rate;
comparing the first weather forecast and the second weather forecast;
selecting either the first intermediary location or the second intermediary location based at least in part on the comparison; and
generating an itinerary that includes the selected intermediary location.

2. The method of claim 1, further comprising:
estimating a travel time between the departure location and the destination location based at least in part on the first weather forecast or the second weather forecast.

3. The method of any of claims 1-2, further comprising:
identifying a modified intermediary time that the user is projected to arrive at the first intermediary location based on the first weather forecast, and
identifying a modified first weather forecast for the first intermediary location at the modified intermediary time.

4. The method of any of claims 1-3, wherein the first probability of the specific type of precipitation at the specific rate is generated by:
identifying a plurality of type probabilities, each of the plurality of type probabilities indicating a likelihood that a corresponding precipitation type will occur;
identifying a plurality of rate probabilities, each of the plurality of rate probabilities indicating a likelihood that a corresponding precipitation rate will occur; and
combining the plurality of type probabilities and the plurality of rate probabilities to produce a plurality of result probabilities, each of the plurality of result probabilities indicating a likelihood that one of the plurality precipitation types will occur at one of the plurality of precipitation rates.

5. The method of any of claims 1-4, wherein:
the departure location, the destination location and the departure time are received from a remote device;
at least one of the departure location and the destination location is the current location of the remote device; and
the departure time is the current time.

6. The method of any of claims 1-5, wherein:
the first intermediary location is part of a first set of intermediary locations between the departure location and the destination location;
the second intermediary location is part of a second set of intermediary locations between the departure location and the destination location;
the first intermediary time is part of a first set of intermediary times, each of the first set of intermediary times corresponding to a time that that the user is projected to arrive at a corresponding intermediary location
of the first set of intermediary locations;-the second intermediary time is part of a second set of intermediary times, each of the second set of intermediary times corresponding to a time that the user is projected to arrive at a corresponding intermediary location of the second set of intermediary locations; the first weather forecast is part of a first set of weather forecasts for the first set of intermediary locations at the first set of intermediary times; the second weather forecast is part of a second set of weather forecasts for the second set of intermediary locations at the second set of intermediary times; and
the method further comprises comparing the first set of weather forecasts and the second set of weather forecasts.

7. The method of any of claims 1-6 further comprising:
outputting the first weather forecast and the second weather forecast.

8. A device for generating itineraries comprising:
one or more processors,
a memory storing instructions for the one or more processors, and
a communication module to connect to a remote device over a communication network,
wherein when the one or more processors execute the instructions stored in the memory, the device is caused to:
receive a departure location, a destination location and a departure time;
identify an intermediary location between the departure location and the destination location;
identify a first intermediary time that a user of a ground transportation device departing from the departure location at the departure time is projected to arrive at the first intermediary location;
identify a first weather forecast for the first intermediary location at the first intermediary time, **characterised in that**
the first weather forecast comprising a first probability of a specific type of precipitation at a specific rate;
identify a second intermediary location between the departure location and the destination location;
identify a second intermediary time that the user is projected to arrive at the second intermediary location;
identify a second weather forecast for the second intermediary time at the second intermediary location, the second weather forecast comprising a second probability of the specific type of precipitation at the specific rate;
compare the first weather forecast and the second weather forecast;
select either the first intermediary location or the second intermediary location based at least in part on the comparison; and
generate an itinerary that includes the selected intermediary location.

9. The device of claim 8, wherein the device is caused to estimate a travel time between the departure location and the destination location based at least in part on the first weather forecast or the second weather forecast.

10. The device of claim 8 or 9, wherein the device is further caused to:
identify a modified intermediary time that the user is projected to arrive at the first intermediary location based on the first weather forecast; and
identify a modified first weather forecast for the first intermediary location at the modified intermediary time.

11. The device of any of claims 8-10, wherein the first probability of the specific type of precipitation at the specific rate is generated by:
identifying a plurality of type probabilities, each of the plurality of type probabilities indicating a likelihood that a corresponding precipitation type will occur;
identifying a plurality of rate probabilities, each of the plurality of rate probabilities indicating a likelihood that a corresponding precipitation rate will occur; and
combining the plurality of type probabilities and the plurality of rate probabilities to produce a plurality of result probabilities, each of the plurality of result probabilities indicating a likelihood that one of the plurality precipitation types will occur at one of the plurality of precipitation rates.

## Patentansprüche

1. Computerimplementiertes Verfahren zum Generieren von Routen, umfassend:
das Empfangen eines Abfahrtsorts, eines Zielorts und einer Abfahrtszeit;
das Ermitteln eines ersten Zwischenorts zwischen dem Abfahrtsort und dem Zielort;
das Ermitteln einer ersten Zwischenzeit, zu der ein Benutzer eines Bodenverkehrsmittels, der zur Abfahrtszeit von einem Abfahrtsort abfährt,
voraussichtlich an dem ersten Zwischenort eintreffen wird;
das Ermitteln einer ersten Wettervorhersage für den ersten Zwischenort zur ersten Zwischenzeit;
**dadurch gekennzeichnet,**
**dass** die erste Wettervorhersage eine erste Wahrscheinlichkeit einer bestimmten Art von Niederschlag mit einer bestimmten Rate umfasst; und
**dass** das Verfahren ferner umfasst:
das Ermitteln eines zweiten Zwischenorts zwischen dem Abfahrtsort und dem Zielort;
das Ermitteln einer zweiten Zwischenzeit, zu der ein Benutzer eines Bodenverkehrsmittels, der zur Abfahrtszeit von dem Abfahrtsort abfährt, voraussichtlich an dem zweiten Zwischenort eintreffen wird;
das Ermitteln einer zweiten Wettervorhersage für die zweite Zwischenzeit an dem zweiten Zwischenort, wobei die zweite Wettervorhersage eine zweite Wahrscheinlichkeit der bestimmten Art von Niederschlag mit einer bestimmten Rate umfasst;
das Vergleichen der ersten Wettervorhersage und der zweiten Wettervorhersage;
das Wählen entweder des ersten Zwischenorts oder des zweiten Zwischenorts zumindest teilweise basierend auf dem Vergleich; und
das Generieren einer Route, die den gewählten Zwischenort enthält.

2. Verfahren nach Anspruch 1, ferner umfassend:
das Schätzen einer Fahrzeit zwischen dem Abfahrtsort und dem Zielort zumindest teilweise basierend auf der ersten Wettervorhersage oder der zweiten Wettervorhersage.

3. Verfahren nach einem der Ansprüche 1 bis 2, ferner umfassend:
das Ermitteln einer geänderten Zwischenzeit, zu der der Benutzer voraussichtlich an dem ersten Zwischenort eintreffen wird, basierend auf der ersten Wettvorhersage, und
das Ermitteln einer geänderten ersten Wettervorhersage für den ersten Zwischenort zu der geänderten Zwischenzeit.

4. Verfahren nach einem der Ansprüche 1 bis 3, wobei die erste Wahrscheinlichkeit der bestimmten Art von Niederschlag mit der bestimmten Rate generiert wird durch:
das Ermitteln einer Vielzahl von Art-Wahrscheinlichkeiten, wobei jede der Vielzahl von Art-Wahrscheinlichkeiten eine Wahrscheinlichkeit anzeigt, dass eine entsprechende Niederschlagsart eintritt;
das Ermitteln einer Vielzahl von Raten-Wahrscheinlichkeiten, wobei jede der Vielzahl von Raten-Wahrscheinlichkeiten eine Wahrscheinlichkeit anzeigt, dass eine entsprechende Niederschlagsrate eintritt; und
das Kombinieren der Vielzahl von Art-Wahrscheinlichkeiten und der Vielzahl von Raten-Wahrscheinlichkeiten zum Produzieren einer Vielzahl von Ergebnis-Wahrscheinlichkeiten, wobei jede der Vielzahl von Ergebnis-Wahrscheinlichkeiten eine Wahrscheinlichkeit anzeigt, dass eine der Vielzahl von Niederschlagsarten mit einer der Vielzahl von Niederschlagsraten eintritt.

5. Verfahren nach einem der Ansprüche 1 bis 4, wobei:
der Abfahrtsort, der Zielort und die Abfahrtszeit von einem entfernten Gerät empfangen werden;
zumindest der Abfahrtsort oder zumindest der Zielort der aktuelle Ort des entfernten Geräts ist; und
die Abfahrtszeit die aktuelle Zeit ist.

6. Verfahren nach einem der Ansprüche 1 bis 5, wobei:
der erste Zwischenort Teil einer ersten Gruppe von Zwischenorten zwischen dem Abfahrtsort und dem Zielort ist;
der zweite Zwischenort Teil einer zweiten Gruppe von Zwischenorten zwischen dem Abfahrtsort und dem Zielort ist;
die erste Zwischenzeit Teil einer ersten Gruppe von Zwischenzeiten ist, wobei jede Zwischenzeit der ersten Gruppe von Zwischenzeiten einer Zeit entspricht,
zu der der Benutzer voraussichtlich an einem entsprechenden Zwischenort der ersten Gruppe von Zwischenorten eintrifft;
die zweite Zwischenzeit Teil einer zweiten Gruppe von Zwischenzeiten ist,
wobei jede Zwischenzeit der zweiten Gruppe von Zwischenzeiten einer Zeit entspricht, zu der der Benutzer voraussichtlich an einem entsprechenden Zwischenort der zweiten Gruppe von Zwischenorten eintrifft;
die erste Wettervorhersage Teil einer ersten Gruppe von Wettervorhersagen für die erste Gruppe von Zwischenorten zu Zwischenzeiten der ersten Gruppe von Zwischenzeiten ist;
die zweite Wettervorhersage Teil einer zweiten Gruppe von Wettervorhersagen für die zweite Gruppe von Zwischenorten zu Zwischenzeiten der zweiten Gruppe von Zwischenzeiten ist; und wobei
das Verfahren ferner das Vergleichen der ersten Gruppe von Wettervorhersagen und der zweiten Gruppe von Wettervorhersagen umfasst.

7. Verfahren nach einem der Ansprüche 1 bis 6, ferner umfassend:
die Ausgabe der ersten Wettervorhersage und der zweiten Wettervorhersage.

8. Vorrichtung zum Generieren von Routen, umfassend:
einen oder mehrere Prozessoren,
einen Speicher zum Speichern von Befehlen für den oder die Prozessoren und ein Kommunikationsmodul für die Verbindung mit einem entfernten Gerät über ein Kommunikationsnetz,
wobei die Vorrichtung bei Ausführung der in dem Speicher gespeicherten Befehle durch den oder die Prozessoren veranlasst wird:
einen Abfahrtsort, einen Zielort und eine Abfahrtszeit zu empfangen;
einen Zwischenort zwischen dem Abfahrtsort und dem Zielort zu ermitteln;
eine erste Zwischenzeit zu ermitteln, zu der ein Benutzer eines Bodenverkehrsmittels, der zur Abfahrtszeit von einem Abfahrtsort abfährt, voraussichtlich an dem ersten Zwischenort eintreffen wird;
eine erste Wettervorhersage für den ersten Zwischenort zur ersten Zwischenzeit zu ermitteln,
**dadurch gekennzeichnet,**
**dass** die erste Wettervorhersage eine erste Wahrscheinlichkeit einer bestimmten Art von Niederschlag mit einer bestimmten Rate umfasst;
einen zweiten Zwischenort zwischen dem Abfahrtsort und dem Zielort zu ermitteln;
eine zweite Zwischenzeit zu ermitteln, zu der der Benutzer voraussichtlich an dem zweiten Zwischenort eintreffen wird;
eine zweite Wettervorhersage für die zweite Zwischenzeit an dem zweiten Zwischenort zu ermitteln, wobei die zweite Wettervorhersage eine zweite Wahrscheinlichkeit der bestimmten Art von Niederschlag mit der bestimmten Rate umfasst;
die erste Wettervorhersage und die zweite Wettervorhersage zu vergleichen;
zumindest teilweise basierend auf dem Vergleich entweder der erste Zwischenort oder der zweite Zwischenort auszuwählen; und
eine Route zu generieren, die den gewählten Zwischenort enthält.

9. Vorrichtung nach Anspruch 8, wobei die Vorrichtung veranlasst wird, zumindest teilweise basierend auf der ersten Wettervorhersage oder der zweiten Wettervorhersage eine Fahrzeit zwischen dem Abfahrtsort und dem Zielort zu schätzen.

10. Vorrichtung nach Anspruch 8 oder 9, wobei die Vorrichtung ferner veranlasst wird, basierend auf der ersten Wettervorhersage eine geänderte Zwischenzeit zu ermitteln, zu der der Benutzer voraussichtlich an dem ersten Zwischenort eintreffen wird; und
eine geänderte erste Wettervorhersage für den ersten Zwischenort zu der geänderten Zwischenzeit zu ermitteln.

11. Vorrichtung nach einem der Ansprüche 8 bis 10, wobei die erste Wahrscheinlichkeit der bestimmten Art von Niederschlag mit der bestimmten Rate generiert wird durch:
das Ermitteln einer Vielzahl von Art-Wahrscheinlichkeiten, wobei jede der Vielzahl von Art-Wahrscheinlichkeiten eine Wahrscheinlichkeit anzeigt, dass eine entsprechende Niederschlagsart eintritt;
das Ermitteln einer Vielzahl von Raten-Wahrscheinlichkeiten, wobei jede der Vielzahl von Raten-Wahrscheinlichkeiten eine Wahrscheinlichkeit anzeigt, dass eine entsprechende Niederschlagsrate eintritt; und
das Kombinieren der Vielzahl von Art-Wahrscheinlichkeiten und der Vielzahl von Raten-Wahrscheinlichkeiten zum Produzieren einer Vielzahl von Ergebnis-Wahrscheinlichkeiten, wobei jede der Vielzahl von Ergebnis-Wahrscheinlichkeiten eine Wahrscheinlichkeit anzeigt, dass eine der Vielzahl von Niederschlagsarten mit einer der Vielzahl von Niederschlagsraten eintritt.

## Revendications

1. Procédé assisté par ordinateur permettant de créer des itinéraires comprenant des étapes consistant à :
recevoir un lieu de départ, un lieu de destination et un temps de départ,
identifier un premier lieu intermédiaire entre le lieu de départ et lieu de destination,
identifier un premier temps intermédiaire auquel un utilisateur d'un dispositif de transport terrestre partant du lieu de départ au temps de départ et prévoit d'arriver au premier lieu intermédiaire,
**caractérisé en ce que** la première prévision météorologique comporte une première probabilité d'un type spécifique de précipitation à un taux spécifique, et **en ce que** le procédé comprend en outre des étapes consistant à :
identifier un second lieu intermédiaire situé entre le lieu de départ et le lieu de destination,
identifier un second temps intermédiaire auquel un utilisateur d'un dispositif de transport terrestre partant du lieu de départ au temps de départ prévoit d'arriver au second lieu intermédiaire,
identifier une seconde prévision météorologique pour le second tempst intermédiaire au second lieu intermédiaire, la seconde précision météorologique comprenant une seconde probabilité du type spécifique de précipitation au taux spécifique,
comparer la première prévision météorologique et la seconde prévision météorologique,
sélectionner le premier lieu intermédiaire ou le second lieu intermédiaire sur le fondement au moins en partie de la comparaison, et,
créer un itinéraire qui comprend le lieu intermédiaire sélectionné.

2. Procédé conforme à la revendication1,
comprenant en outre une étape consistant à :
estimer un temps de parcours entre le lieu de départ et le lieu de destination sur le fondement au moins en partie de la première prévision météorologique ou la seconde prévision météorologique.

3. Procédé conforme à l'une quelconque des revendications 1 et 2, comprenant en outre des étapes consistant à :
identifier un temps intermédiaire modifié auquel l'utilisateur est prévoit d'arriver au premier lieu intermédiaire sur le fondement de la première prévision météorologique, et
identifier une première prévision météorologique modifiée pour le premier lieu intermédiaire à au temps intermédiaire modifié.

4. Procédé conforme à l'une quelconque des revendications 1 à 3, selon lequel la première probabilité du type spécifique de précipitation au taux spécifique est créée par des étapes consistant à :
identifier un ensemble de probabilités de type, chacune des probabilités de type indiquant la vraisemblance pour que le type de précipitation correspondant se produise,
identifier un ensemble de probabilités de taux, chaque probabilité de vitesse indiquant la vraisemblance pour que le taux de précipitation correspondant se produise, et
combiner l'ensemble de probabilités de type et l'ensemble de probabilités de taux pour obtenir un ensemble de probabilités de résultat chacune des probabilités de résultat indiquant la vraisemblance pour que l'un des types de précipitation se produise à l'un taux de précipitation.

5. Procédé conforme à l'une quelconque des revendications 1 à 4, selon lequel,
le lieu de départ, le lieu de destination et le temps de départ sont reçus à partir d'un dispositif à distance,
le lieu de départ et/ou le lieu de destination est le lieu actuel du dispositif à distance et temps de départ est le temps actuel.

6. Procédé conforme à l'une quelconque des revendications 1 à 5, selon lequel :
le premier lieu intermédiaire fait partie d'un premier jeu de lieux intermédiaires situés entre le lieu de départ et le lieu de destination,
le second lieu intermédiaire fait partie d'un second jeu de lieux intermédiaires situés entre le lieu de départ et le lieu de destination,
le premier temps intermédiaire fait partie d'un premier jeu de temps intermédiaires, chaque temps intermédiaire du premier jeu de temps intermédiaires correspondant à un temps auquel l'utilisateur et prévoit d'arriver à un lieu intermédiaire correspondant du premier jeu de lieux intermédiaires,
le second temps intermédiaire fait partie d'un second jeu temps intermédiaires, chaque temps intermédiaire du second jeu de temps intermédiaires correspondant à un temps auquel l'utilisateur et prévoit d'arriver à un lieu intermédiaire correspondant du second jeu de temps intermédiaires,
la première prévision météorologique fait partie d'un premier jeu de prévisions météorologiques pour le premier jeu de lieux intermédiaires au premier jeu de temps intermédiaires, la seconde prévision météorologique fait partie d'un second jeu de prévisions météorologiques pour le second jeu de lieux intermédiaires au second jeu de temps intermédiaires, et
le procédé comprend en outre une étape consistant à comparer le premier jeu de prévisions météorologiques et le second jeu de prévisions météorologiques.

7. Procédé conforme à l'une quelconque des revendications 1 à 6, comprenant en outre une étape consistant à délivrer en sortie la première prévision météorologique et la second prévision météorologique.

8. Dispositif permettant de créer des itinéraires comprenant :
au moins un processeur,
une mémoire stockant des instructions pour le processeur, et,
un module de communication permettant une connexion à un dispositif à distance sur un réseau de communications,
lorsque le processeur exécute les instructions stockées dans la mémoire, le dispositif étant commandé pour :
recevoir un lieu de départ, un lieu de destination et un temps de départ,
identifier un lieu intermédiaire situé entre le lieu de départ et le lieu de destination,
identifier un premier temps intermédiaire auquel l'utilisateur d'un dispositif de transport terrestre partant du lieu de départ au temps de départ prévoit d'arriver au premier lieu intermédiaire,
identifier une première provision météorologique pour le premier lieu intermédiaire au premier temps intermédiaire,
**caractérisé en ce que**,
la première prévision météorologique comporte une première probabilité d'un type spécifique de précipitation à un taux spécifique,
identifier un second lieu intermédiaire situé entre le lieu de départ et le lieu de destination,
identifier un second temps intermédiaire auquel l'utilisateur prévoit d'arriver au second lieu intermédiaire,
identifier une seconde prévision météorologique pour le second temps intermédiaire au premier lieu intermédiaire, la seconde prévision météorologique comprenant une seconde probabilité du type spécifique de précipitation au taux spécifique,
comparer la première prévision météorologique et la seconde prévision météorologique,
sélectionner le premier lieu intermédiaire ou le second lieu intermédiaire sur le fondement au moins en partie de la comparaison,
créer un itinéraire qui comprend le lieu intermédiaire sélectionné.

9. Dispositif conforme à la revendication 8,
commandé pour estimer la durée de parcours entre le lieu de départ et le lieu de destination sur le fondement au moins en partie de la première prévision météorologique ou de la second prévision météorologique.

10. Dispositif conforme à la revendication 8 ou 9,
en outre commandé pour :
identifier un temps intermédiaire modifié auquel l'utilisateur et prévoit d'arriver au premier lieu intermédiaire sur le fondement de la première prévision météorologique, et
identifier une prévision météorologique modifiée pour le premier lieu intermédiaire au temps intermédiaire modifié.

11. Dispositif conforme à l'une quelconque des revendications 8 à 10, dans lequel la première probabilité du type spécifique de précipitation au taux spécifique est créée :
en identifiant un ensemble de probabilités de type, chaque probabilité de type de l'ensemble de probabilités de type indiquant la vraisemblance pour que le type de précipitation correspondant se produise,
en identifiant un ensemble de probabilités de taux, chacune des probabilités de taux de l'ensemble de probabilités de taux indiquant la vraisemblance pour le taux de précipitation correspondant se produise,
en combinant les probabilités de l'ensemble de probabilités de type et les probabilités de l'ensemble de probabilités de taux pour obtenir un ensemble de probabilités de résultat chacune des probabilités de résultat de l'ensemble de probabilités de résultat indiquant la vraisemblance pour que l'un des types de précipitation de l'ensemble de types de précipitation se produise à un taux de précipitation de l'ensemble de taux de précipitation.
